# EUROPEAN PATENT SPECIFICATION

(11) **EP 2 025 958 B1**
(45) Date of publication and mention of the grant of the patent: **07.09.2011**
(21) Application number: 07743467.8
(22) Date of filing: 16.05.2007
(51) Int. Cl.: F16C 33/34, F16C 19/30, F16C 33/54

(54) **ROLLER AND THRUST ROLLER BEARING**
ROLLE UND AXIALROLLENLAGER
ROULEAU ET BUTÉE À ROULEAUX

(30) Priority: 08.06.2006 JP 2006160118
(43) Date of publication of application: 18.02.2009
(73) Proprietor: NTN Corporation, Osaka-shi, Osaka 550-0003 (JP)
(72) Inventor: OBAYASHI, Kousuke c/o NTN Corporation, Iwata-shi, Shizuoka 438-8510 (JP); YAMAMOTO, Kazuyuki c/o NTN Corporation, Iwata-shi, Shizuoka 438-8510 (JP)
(74) Representative: Bockhorni & Kollegen
(86) International application number: PCT/JP2007/060032
(87) International publication number: WO 2007/142001

(56) References cited:
- EP-A1- 1 035 339
- JP-A- 2001 065 574
- JP-A- 2002 250 338
- JP-A- 2002 327 752
- JP-A- 2003 120 684
- JP-A- 2004 156 744
- JP-A- 2005 273 755
- JP-A- 2005 308 138
- JP-A- 2006 052 789
- US-A1- 2004 264 825

## Description

### TECHNICAL FIELD

The present invention relates to a roller and a thrust roller bearing.

### BACKGROUND ART

According to a roller bearing to support a rotation shaft, when a thrust load is applied thereto, a thrust roller bearing is used. The thrust roller bearing used in a compressor of a car air conditioner, an automatic transmission, a manual transmission, and a hybrid car is required to have characteristics durable in a harsh environment such as high-speed rotation and a dilute lubrication environment to meet recent requests of fuel saving, miniaturization and high output. A thrust roller bearing durable in the harsh environment is disclosed in Japanese Patent No. 3604458 and Japanese Patent No. 3661133.

According to the Japanese Patent No. 3604458, the thrust roller bearing has rollers and a race (track ring). First and second crownings having different curvatures are provided on an outer peripheral surface of the roller in its rolling axial direction. Thus, a bearing function is stabilized and the life is elongated by reducing a contact surface pressure to prevent excessive loading, based on the flexure of the track ring. However, a relation between a length of the roller in a radial direction and a length of the roller in a rolling axial direction is not clear, so that an optimal crowning cannot be formed based on the size of the roller.

Here, according to a roller contained in the thrust needle roller bearing disclosed in the Japanese Patent No. 3661133, a crowning is provided such that a ratio between a length of the roller in a rolling axial direction and a length of the roller in a radial direction is 1.2 to 2.0, and a contact length with a track ring is 3/4 of the length of the roller in the rolling axial direction and less. Thus, the behavior of the roller can be stabilized and the life is elongated.

However, the crowning provided on the roller is a partial crowning, so that there is a part in which the crowning is not provided in the rolling axial direction of the roller. As a result, various problems could arise in the above-described harsh environment.

A document of technological background is US 2004/0264825 A1 showing a superfinishing machine, a superfinishing method, a rolling element and a rolling bearing.

### DISCLOSURE OF THE INVENTION

It is an object of the present invention to provide a roller capable of improving a bearing function.

It is another object of the present invention to provide a thrust roller bearing capable of improving a bearing function.

A roller according to the present invention is provided with a full crowning on an outer diameter surface. The full crowning comprises a first crowning provided in the center of the roller in its rolling axial direction, a second crowning provided on each end face of the first crowning so as to be continued to the first crowning, and a third crowning provided on each end face of the second crowning so as to be continued to the second crowning. Here, when a length of the roller in its rolling axial direction is twice a length of the roller in its radial direction and less, a curvature radius R1 of the first crowning positioned at a distance of 32% of the length of the roller in the rolling axial direction from each end face of the roller is R551 to R1000, a curvature radius R2 of the second crowning positioned at a distance of 23% of the length of the roller in the rolling axial direction from each end face of the roller is R321 to R550, and a curvature radius R3 of the third crowning positioned at a distance of 15% of the length of the roller in the rolling axial direction from each end face of the roller is R200 to R320, and when the length of the roller in its rolling axial direction is more than twice but less than threefold the length of the roller in its radial direction, a curvature radius R4 of the first crowning positioned at a distance of 22% of the length of the roller in the rolling axial direction from each end face of the roller is R561 to R670, a curvature radius R5 of the second crowning positioned at a distance of 16% of the length of the roller in the rolling axial direction from each end face of the roller is R421 to R560, and a curvature radius R6 of the third crowning positioned at a distance of 12% of the length of the roller in the rolling axial direction from each end face of the roller is R310 to R420.

The above roller can receive the load applied thereto appropriately based on the size. More specifically, based on a ratio between the length of the roller in the rolling axial direction and the length of the roller in the radial direction, when the load is relatively low, the load can be received by the first crowning having the large curvature radius. In addition, when the load is relatively high or flexure and inclination of a bearing mount surface is small, the load is received by the first crowning having the large curvature radius and the second crowning having the relatively large curvature radius. Furthermore, when the load is higher and the flexure and inclination of the bearing mount surface are great, the load is received by the first crowning having the large curvature radius and the second crowning having the relatively large curvature radius and the third crowning having the small curvature radius. Thus, the load can be suitably received by the crownings having the different curvature radiuses under the various load conditions. Therefore, the life and silence properties are improved and the torque can be reduced, so that a bearing function can be improved.

Preferably, when it is assumed that a length of the roller in the rolling axial direction from one end face to a top of the outer diameter surface of the roller is "a", and a length of the roller in the rolling axial direction from the other end face to the top of the outer diameter surface of the roller is "b", in the case where the length of the roller in the rolling axial direction is twice the length of the roller in the radial direction and less, a difference | a-b | I between the lengths is 4% of the length of the roller in the rolling axial direction and less, and in the case where the length of the roller in the rolling axial direction is more than twice but less than threefold the length of the roller in the radial direction, a difference | a-b | between the lengths is 3% of the length of the roller in the rolling axial direction and less. Thus, the load applied to the roller can be received almost evenly by the right and left crownings provided on both sides of the end faces. Therefore, the movement of the roller can be stabilized.

Still preferably, a roundness of the roller at a part provided with each of the first, second and third crownings is 1.5 µm (micrometer) and less.

In addition, a difference in crowning amount between the crowning provided on the one end face side and the crowning provided on the other end face side is 1 µm (micrometer) and less. Thus, the bearing function can be further improved.

According to another aspect of the present invention, a thrust roller bearing includes the above roller and a retainer, to support a thrust load. According to this thrust roller bearing, the life and the silence properties are improved and the torque can be reduced.

Preferably, the retainer is in the shape of a disk, and has a plurality of pockets for holding the rollers and an outer peripheral flange folded back in a rotation shaft direction. An inner peripheral surface of the outer peripheral flange forms an outer peripheral wall surface of the pocket, and the outer peripheral wall surface of the pocket is an ironing-processed surface. Thus, when the outer peripheral end face of the roller abuts on the outer peripheral wall surface of the pocket, it abuts on the ironing-processed surface. Since the ironing-processed surface is smooth and has preferable surface roughness, drilling wear can be prevented. Therefore, the roller can be stably retained for a long period of time, and the life of the thrust roller bearing can be elongated.

Here, the drilling wear is a phenomenon in which when the roller end face, especially the end face on the outer diameter side is pressed against the outer diameter side face of the retainer pocket by the centrifugal force and the like and the contact due to the rotation of the roller is added thereto, the outer diameter side face of the retainer pocket is abnormally worn.

The above roller can receive the load applied thereto appropriately based on the size. Thus, the load can be suitably received by the crownings having the different curvature radiuses under the various load conditions. Therefore, the life and silence properties are improved and the torque can be reduced, so that a bearing function can be improved.

In addition, according to the thrust roller bearing in the present invention, the life and the silence properties are improved and the torque can be reduced.

### BRIEF DESCRIPTION OF DRAWINGS

Fig. 1 is a sectional view showing a part of a roller according to one embodiment of the present invention;
Fig. 2 is a sectional view showing a part of a roller according to another embodiment of the present invention;
Fig. 3 is a view showing a thrust roller bearing according to one embodiment of the present invention taken from a shaft direction;
Fig. 4 is a sectional view showing the thrust roller bearing shown in Fig. 3 taken along line IV-O-IV in Fig. 3;
Fig. 5 is an enlarged view showing a part V of the thrust roller bearing in Fig. 3;
Fig. 6 is an enlarged view showing a part VI of the thrust roller bearing in Fig. 4;
Fig. 7 is an enlarged view showing a state in which an outer peripheral end face of the roller abuts on an outer peripheral wall surface of a pocket, taken along an axial direction;
Fig. 8 is an enlarged view showing the state in which the outer peripheral end face of the roller abuts on the outer peripheral wall surface of the pocket; and
Fig. 9 is a flow chart showing representative processes in a production process of a retainer contained in the thrust roller bearing according to one embodiment of the present invention.

### BEST MODE FOR CARRYING OUT THE INVENTION

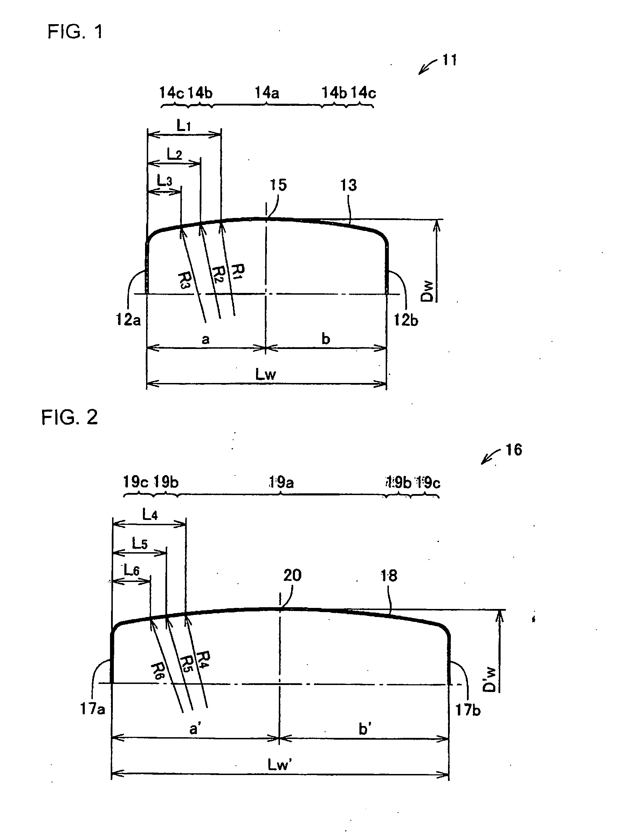

Embodiments of the present invention will be described with reference to the drawings hereinafter. First, the configuration of a roller according to one embodiment of the present invention will be described. Fig. 1 is a sectional view showing a part of a roller when the roller in which a length in a direction of a roller rolling axis is twice a length of a roller radial direction and less is cut along a plane passing through the roller rolling axis. A length Lw of a roller 11 in the rolling axial direction is twice a length Dw of the roller 11 in the radial direction and less. That is, a relation of Lw/Dw ≦ 2 is satisfied.

With reference to Fig. 1, the roller 11 has end faces 12a and 12b positioned at both ends in the rolling axial direction, and an outer diameter surface 13 serving as a rolling surface. The each of the end faces 12a and 12b of the roller 11 is an F end face, that is, a flat end face.

A full crowning is provided on the outer diameter surface. The full crowning means that a crowning is provided over a whole region in the rolling axial direction except for a chamfered part of the roller 11. The full crowning includes a first crowning 14a provided in the center of the roller 11 in the rolling axial direction, second crownings 14b provided on both sides of the end faces 12a and 12b of the first crowning 14a so as to be continued to the first crowning 14a, and third crownings 14c provided on both sides of the end faces 12a and 12b so as to be continued to the second crownings 14b. That is, the first to third crownings 14a to 14c are smoothly continued.

Here, when it is assumed that 32% of the length Lw of the roller in the rolling axial direction is equal to a length L1, a curvature radius R1 of the first crowning 14a at the distance of L1 from the one end face 12a of the roller 11 is R551 to R1000. The same constitution is also provided on the side of the other end face 12b. More specifically, the first crowning 14a is provided such that the curvature radius R1 at the position of 32% of the length Lw of the roller in the rolling axial direction from each of the end faces 12a and 12b of the roller 11 becomes R551 to R1000.

In addition, when it is assumed that 23% of the length Lw of the roller in the rolling axial direction is equal to the length L2, a curvature radius R2 of the second crowning 14b at the distance of L2 from the one end face 12a of the roller 11 is R321 to R550. The same constitution is also provided on the side of the other end face 12b. More specifically, the second crowning 14b is provided such that the curvature radius R2 at the position of 23% of the length Lw of the roller in the rolling axial direction from each of the end faces 12a and 12b of the roller 11 becomes R321 to R550.

In addition, when it is assumed that 15% of the length Lw of the roller in the rolling axial direction is equal to a length L3, a curvature radius R3 of the third crowning 14c at the distance of L3 from the one end face 12a of the roller 11 is R200 to R320. The same constitution is also provided on the side of the other end face 12b. More specifically, the third crowning 14c is provided such that the curvature radius R3 at the position of 15% of the length Lw of the roller in the rolling axial direction from each of the end faces 12a and 12b of the roller 11 becomes R200 to R320.

In this constitution, the roller 11 can suitably receive a load. More specifically, when the load is relatively low, the load can be received by the first crowning 14a having the large curvature radius R1. In addition, when the load is relatively high, or flexure and inclination of a bearing mount surface is small, the load is received by the first crowning 14a having the large curvature radius R1 and the second crowning 14b having the relatively large curvature radius R2. When the load is high and the flexure and inclination of the bearing mount surface is great, the load is received by the first crowning 14a having the large curvature radius R1 and the second crowning 14b having the relatively large curvature radius R2 and the third crowning 14c having the small curvature radius R3. Thus, the load can be suitably received by the first to third crownings 14a to 14c having the different curvature radiuses under the various load conditions. Therefore, the life and silence properties are improved and the torque can be reduced, so that a bearing function can be improved.

Here, when it is assumed that a length of the roller 11 in the rolling axial direction from the one end face 12a to a top 15 of the outer diameter surface 13 of the roller 11 is "a", and a length of the roller 11 in the rolling axial direction from the other end face 12b to the top 15 of the outer diameter surface 13 of the roller 11 is "b", a difference |a-b| between the lengths is to be 4% of the length Lw of the roller in the rolling axial direction and less. Thus, the load applied to the roller 11 can be received almost evenly by the right and left first, second and thir crownings 14a, 14b and 14c provided on both sides of the end faces 12a and 12b. Therefore, the movement of the roller 11 can be stabilized.

In addition, it is preferable that roundness of the roller 11 at the first, second and third crownings 14a to 14c are 1.5 µm (micrometer) and less. Furthermore, it is preferable that the difference in crowning amount between the crowning provided on the side of the one end face 12a and the crowning provided on the side of the other end face 12b is 1 µm (micrometer) and less. According to the above constitution, the bearing function can be further improved. In addition, the crowning amount is defined as follows. That is, a virtual line is drawn from the top 15 of the outer diameter surface of the roller 11 so as to be parallel to the rolling axis of the roller 11. Thus, the crowning amount is the shortest length between the virtual line and each of the right and left first to third crownings 14a to 14c at the positions L1, L2 and L3.

Fig. 2 is a sectional view showing a part of a roller when the roller in which a length in a direction of a roller rolling axis is more than twice but less than threefold a length in a roller radial direction is cut along a plane passing through the roller rolling axis, which corresponds to Fig. 1. A length Lw' of a roller 16 in its rolling axial direction is more than twice but less than threefold a length Dw' of the roller 16 in its radial direction. That is, a relation of 2 < Lw'/Dw' < 3 is satisfied.

With reference to Fig. 2, similar to the above roller 11, a full crowning is provided on an outer diameter surface 18 of the roller 16. The full crowning includes a first crowning 19a provided in the center of the roller 16 in the rolling axial direction, second crownings 19b provided on both sides of end faces 17a and 17b of the first crowning 19a so as to be continued to the first crowning 19a, and third crownings 19c provided on both sides of the end faces 17a and 17b so as to be continued to the second crownings 19b. That is, the first to third crownings 19a to 19c are smoothly continued.

Here, when it is assumed that 22% of the length Lw' of the roller in the rolling axial direction is equal to a length L4, a curvature radius R4 of the first crowning 19a at the distance of L4 from the one end face 17a of the roller 16 is R561 to R670. The same constitution is also provided on the side of the other end face 17b. More specifically, the first crowning 19a is provided such that the curvature radius R4 at the position of 22% of the length Lw' of the roller in the rolling axial direction from each of the end faces 17a and 17b of the roller 16 becomes R561 to R670.

In addition, when it is assumed that 16% of the length Lw' of the roller in the rolling axial direction is equal to a length L5, a curvature radius R5 of the second crowning 19b at the distance of L5 from the one end face 17a of the roller 16 is R421 to R560. The same constitution is also provided on the side of the other end face 17b. More specifically, the second crowning 19b is provided such that the curvature radius R5 at the position of 16% of the length Lw' of the roller in the rolling axial direction from each of the end faces 17a and 17b of the roller 16 becomes R421 to R560.

In addition, when it is assumed that 12% of the length Lw' of the roller in the rolling axial direction is equal to a length L6, a curvature radius R6 of the third crowning 19c at the distance of L6 from the one end face 17a of the roller 16 is R310 to R420. The same constitution is also provided on the side of the other end face 17b. More specifically, the third crowning 19c is provided such that the curvature radius R6 at the position of 12% of the length Lw' of the roller in the rolling axial direction from each of the end faces 17a and 17b of the roller 16 becomes R310 to R420.

In this constitution, similar to the roller 11, the roller 16 in which the length in the rolling axial direction is more than twice but less than threefold the length in the radial direction can suitably receive a load. Thus, the load can be suitably received by the first to third crownings 19a to 19c having the different curvature radiuses under the various load conditions. Therefore, the life and silence properties are improved and the torque can be reduced, so that a bearing function can be improved.

In addition, when it is assumed that a length of the roller 16 in the rolling axial direction from the one end face 17a to a top 20 of the outer diameter surface 18 of the roller 16 is "a"', and a length of the roller 16 in the rolling axial direction from the other end face 17b to the top 20 of the outer diameter surface 18 of the roller 16 is "b"', a difference |a'- b'l between the lengths is to be 3% of the length Lw' of the roller in the rolling axial direction and less. Thus, the load applied to the roller 16 can be received almost evenly by the right and left crownings provided on both sides of the end faces 17a and 17b. Therefore, the movement of the roller 16 can be stabilized.

In addition, in this case also, it is preferable that roundness of the roller 16 at the first, second and third crownings 19a to 19c are 1.5 µm (micrometer) and less. Furthermore, it is preferable that the difference in crowning amount between the crowning provided on the side of the one end surface 17a and the crowning provided on the side of the other end face 17b is 1 µm (micrometer) and less.

Thus, since the life and the silence properties are improved and the torque is reduced based on each size of the rollers 11 and 16, the bearing function can be improved based on the size.

In addition, when nitrocarburizing process is performed on the above rollers 11 and 16, the life can be elongated. That is, the nitrocarburizing process is performed on the rollers 11 and 16 at 840°C (centigrade) for two to three hours, and tempered at 230°C (centigrade) and then the full crowning is provided for the rollers 11 and 16 as described above. Thus, retained austenite in the surface layers (up to 0.05mm from the surface) of the rollers 11 and 16 can be 15% to 35% of the total. Therefore, the strength and toughness can be improved and the bearing function can be further improved.

Here, a life test, an acoustic test and a torque test were performed with respect to thrust roller bearings containing the rollers having the above constitutions and thrust roller bearings containing conventional rollers. Table 1 and Table 2 show the constitutions of invented rollers 1 and 2 and comparative rollers 1 to 8. According to the invented roller 1 and the comparative rollers 1 to 4 shown in Table 1, the length of the roller in its rolling axial direction is twice the length of the roller in the radial direction and less. Meanwhile, according to the invented roller 2 and the comparative rollers 5 to 8 shown in Table 2, the length of the roller in its rolling axial direction is more than twice but less than threefold the length of the roller in the radial direction. In addition, a bearing size used in the following evaluation tests is such that inner diameter ϕ41mm x outer diameter ϕ55.6mm x width (roller radial length) 3mm and the number of the rollers is 32 in the case where the length of the roller in the rolling axial direction is twice the length of the roller in the radial direction and less. In addition, it is such that inner diameter ϕ41mm x outer diameter ϕ60.4mm x width (roller radial length) 3mm and the number of the rollers is 32 in the case where the length of the roller in the rolling axial direction is more than twice but less than threefold the length of the roller in the radial direction. In addition, "roller length" in the following tables designates the "length of the roller in the rolling axial direction".

**[Table 1]**

| | | Invented roller 1 | Comparative roller 1 | Comparative roller 2 | Comparative roller 3 | Comparative roller 4 |
|---|---|---|---|---|---|---|
| Distance from end face (ratio of roller length) | L 1 | 32% | 32% | 32% | 32% | 32% |
| | L2 | 23% | 23% | 23% | 23% | 23% |
| | L 3 | 15% | 15% | 15% | 15% | 15% |
| Crowning R at the above distance | R 1 | R551 - R1000 | R551 - R1000 | R551 - R1000 | Less than R511 | R1001 and more |
| | R2 | R321 - R550 | R321 - R550 | R321 - R550 | Less than R321 | R551 and more |
| | R3 | R200 - R320 | R200 - R320 | R200 - R320 | Less than R200 | R321 and more |
| Position of top of outer diameter surface of roller (ratio of relative difference between "a" and "b" to roller length) | | 4% and less | 5% and more | 4% and less | 4% and less | 4% and less |
| Roundness | | 1.5µm and less | 1.5µm and less | 1.5µm and more | 1.5µm and less | 1.5µm and less |

**[Table 2]**

| | | Invented roller 2 | Comparative roller 5 | Comparative roller 6 | Comparative roller 7 | Comparative roller 8 |
|---|---|---|---|---|---|---|
| Distance from end face (ratio of roller length) | L4 | 22% | 22% | 22% | 22% | 22% |
| | L5 | 16% | 16% | 16% | 16% | 16% |
| | L6 | 12% | 12% | 12% | 12% | 12% |
| Crowning R at the above distance | R4 | R561~ R670 | R561~ R 670 | R561~ R670 | Less than R561 | R671 and more |
| | R5 | R421-R560 | R421~R 560 | R421~ R560 | Less than R421 | R561 and more |
| | R6 | R310~ R420 | R310~ R 420 | R310~ R420 | Less than R310 | R421 and more |
| Position of top of outer diameter surface of roller (ratio of relative difference between "a" and "b" to roller length) | | 3% and less | 4% and more | 3% and less | 3% and less | 3% and less |
| Roundness | | 1.5µm and less | 1.5µm and less | 1.5µm and more | 1.5µm and less | 1.5µm and less |

Next, a test condition of the life test is shown in Table 3, and test results are shown in Tables 4 and 5. In addition, according to the test result of the life test, life ratios are shown when the life of the invented rollers 1 and 2 is set to one.

**[Table 3]**

| | |
|---|---|
| Load | 3.5 kN |
| Rotation speed | 4000 r/ mn |
| Misalignment amount | 3/ 1000 |
| Lubrication | VG 2 |

**[Table 4]**

| Test roller No. | Life ratio |
|---|---|
| Invented roller 1 | 1 |
| Comparative roller 1 | 0.71 |
| Comparative roller 2 | 0 . 83 |
| Comparative roller 3 | 0.36 |
| Comparative roller 4 | 0.22 |

**[Table 5]**

| Test roller No. | Life ratio |
|---|---|
| Invented roller 2 | 1 |
| Comparative roller 5 | 0. 64 |
| Comparative roller 6 | 0.88 |
| Comparative roller 7 | 0. 29 |
| Comparative roller 8 | 0.14 |

Referring to Tables 1 to 5, when the invented roller 1 and the comparative roller 1, and the invented roller 2 and the comparative roller 5 are compared, the life of the comparative roller 1 is 0.71, and the life of the comparative roller 5 is 0.64 and both lives are shorter, for the following reason. According to the comparative rollers 1 and 5, as compared with the invented rollers 1 and 2, since the position of the top of the outer diameter surface of the roller is shifted from the center of the roller in the rolling axial direction, the movement of the roller is not stable. In this case, the roller is likely to skew and the roller slips. As a result, an oil film is cut and the cut part is in contact with metal and heated, so that the surface is damaged and surface originated flaking is generated.

When the invented roller 1 and the comparative roller 2, and the invented roller 2 and the comparative roller 6 are compared, the life of the comparative roller 2 is 0.83 and the life of the comparative roller 6 is 0.88 and both lives are shorter, for the following reason. According to the comparative rollers 2 and 6, as compared with the invented rollers 1 and 2, the roundness of each crowning is high. When the roundness is high, the rotation of the roller in the rolling direction becomes unstable. Thus, the movement of the roller is not stable and smooth rotation cannot be implemented. In addition, since a part being in contact partially is increased, a contact surface pressure becomes high partially, and inside originated flaking is generated.

When the invented roller 1 and the comparative roller 3, and the invented roller 2 and the comparative roller 7 are compared, the life of the comparative roller 3 is 0.36 and the life of the comparative roller 7 is 0.29 and both lives are shorter, for the following reason. According to the comparative rollers 3 and 7, as compared with the invented rollers 1 and 2, each crowning R is small. Thus, the movement of the roller becomes unstable and a contact surface pressure becomes high as a whole, so that inside originated flaking is generated.

When the invented roller 1 and the comparative roller 4, and the invented roller 2 and the comparative roller 8 are compared, the life of the comparative roller 4 is 0.22 and the life of the comparative roller 8 is 0.14 and both lives are shorter, for the following reason. According to the comparative rollers 4 and 8, as compared with the invented rollers 1 and 2, each crowning R is large. In this case, although a contact surface pressure is low as a whole, an edge load is generated. Therefore, the contact surface pressure becomes high partially, and inside originated flaking is generated. In addition, the roller is likely to slip due to skewing. Thus, an oil film is cut and the cut part is in contact with metal and heated, so that the surface is damaged and surface originated flaking is generated.

As described above, the life of the invented roller 1 is longer than those of the comparative rollers 1 to 4, and the life of the invented roller 2 is longer than those of the comparative rollers 5 to 8.

Next, a test condition of the acoustic test is shown in Table 6, and test results are shown in Tables 7 and 8. In addition, according to the test result of the acoustic test, an acoustic value is an average value when the tests are performed ten times.

**[Table 6]**

| | |
|---|---|
| Load | 100 N |
| Rotation speed | 1800 r/min |
| Lubrication | VG2 |
| Microphone position | Microphone center axis is aligned in direction of 45° from bearing front surface center toward rotation shaft, above horizontal plane passing rotation shaft center, and at distance of 100mm from bearing front surface |

**[Table 7]**

| Test roller No. | Acoustic value , dBA |
|---|---|
| Invented roller 1 | 65.2 |
| Comparative roller 1 | 72.6 |
| Comparative roller 2 | 76.2 |
| Comparative roller 3 | 71.9 |
| Comparative roller 4 | 65.3 |

**[Table 8]**

| Test roller No. | Acoustic value , dBA |
|---|---|
| Invented roller 2 | 66.0 |
| Comparative roller 5 | 72.3 |
| Comparative roller 6 | 77.4 |
| Comparative roller 7 | 71.0 |
| Comparative roller 8 | 66.0 |

Referring to Tables 6 to 8, when the invented roller 1 and the comparative roller 1, and the invented roller 2 and the comparative roller 5 are compared, while the acoustic value of the invented roller 1 is 65.2dBA, the acoustic value of the comparative roller 1 is 72.6dBA, and while the acoustic value of the invented roller 2 is 66.0dBA, the acoustic value of the comparative roller 5 is 72.3dBA, so that the acoustic values of the comparative rollers are higher, for the following reason. According to the comparative rollers 1 and 5, as compared with the invented rollers 1 and 2, the position of the top of the outer diameter surface is shifted from the center position of the roller in the rolling axial direction. Thus, the movement of the roller is unstable.

When the invented roller 1 and the comparative roller 2, and the invented roller 2 and the comparative roller 6 are compared, the acoustic value of the comparative roller 2 is 76.2dBA, and the acoustic value of the comparative roller 6 is 77.4dBA, so that the acoustic values of the comparative rollers are higher, for the following reason. According to the comparative rollers 2 and 6, as compared with the invented rollers 1 and 2, the roundness of each crowning is high. When the roundness of the crowning is high, the rotation of the roller in the rolling direction becomes unstable. Therefore, the movement of the roller is unstable and the smooth rotation cannot be implemented.

When the invented roller 1 and the comparative roller 3, and the invented roller 2 and the comparative roller 7 are compared, the acoustic value of the comparative roller 3 is 71.9dBA, and the acoustic value of the comparative roller 7 is 71.0dBA, so that the acoustic values of the comparative rollers are higher, for the following reason. According to the comparative rollers 3 and 7, as compared with the invented rollers 1 and 2, each crowning R is small. Therefore, the movement of the roller is unstable.

When the invented roller 1 and the comparative roller 4, and the invented roller 2 and the comparative roller 8 are compared, the acoustic value of the comparative roller 4 is 65.3dBA, and the acoustic value of the comparative roller 8 is 66.0dBA, so that they are about the same as those of the invented rollers 1 and 2, for the following reason. According to the comparative rollers 4 and 8, as compared with the invented rollers 1 and 2, each crowning R is large. Therefore, the movement of the roller is stable.

As described above, the acoustic value of the invented roller 1 is lower than those of the comparative rollers 1 to 3, and the acoustic value of the invented roller 2 is lower than those of the comparative rollers 5 to 7.

Next, a test condition of the torque test is shown in Table 9, and test results are shown in Table 10 and Table 11. In addition, according to the test result of the torque test, rotation torque ratios are shown when the rotation torque of the invented rollers 1 and 2 are set to 1. In addition, a comparative roller 9 is a partial crowning roller in which a length of the roller in a rolling axial direction is twice a length of the roller in a radial direction and less and a partial crowning is provided, and a comparative roller 10 is a partial crowning roller in which a length of the roller in a rolling axial direction is more than twice but less than threefold a length of the roller in a radial direction and a partial crowning is provided.

**[Table 9]**

| | |
|---|---|
| Load | 3.0 kN |
| Rotation speed | 2000 r/ min. |
| Lubrication | VG2 applied on whole surface |

**[Table 10]**

| Test roller No. | Rotation torque ratio |
|---|---|
| Invented roller 1 | 1.0 |
| Comparative roller 1 | 1.4 |
| Comparative roller 2 | 1.0 |
| Comparative roller 3 | 1.1 |
| Comparative roller 4 | 1.7 |
| Comparative roller 9 (partially crowned roller) (effective contact length : 37% of roller length) | 2.5 |

**[Table 11]**

| Test roller No. | Rotation torque ratio |
|---|---|
| Invented roller 2 | 1.0 |
| Comparative roller 5 | 1.4 |
| Comparative roller 6 | 1.0 |
| Comparative roller 7 | 1.1 |
| Comparative roller 8 | 1.9 |
| Comparative roller 10 (partially crowned roller) (effective contact length : 52% of roller length) | 3.2 |

Referring to Table 9 to Table 11, when the invented roller 1 and the comparative roller 1, and the invented roller 2 and the comparative roller 5 are compared, the rotational torque of the comparative roller 1 is 1.4 and the rotational torque of the comparative roller 5 is 1.4, so that each torque is higher, for the following reason. According to the comparative rollers 1 and 5, as compared with the invented rollers 1 and 2, the position of the top of the outer diameter surface of the roller is shifted from the center of the roller in the rolling axial direction, the movement of the roller is not stable. Therefore, the roller is likely to skew and the roller is caused to slip.

When the invented roller 1 and the comparative roller 2, and the invented roller 2 and the comparative roller 6 are compared, the rotational torque of the comparative roller 2 is 1.0 and the rotational torque of the comparative roller 6 is 1.0, so that each of them is equal to that of the invented rollers 1 and 2, for the following reason. According to the comparative rollers 2 and 6, as compared with the invented rollers 1 and 2, the roundness of each crowning is high. When the roundness of each crowning is high, although the movement of the roller is not stable, the rotation of the roller in the rolling direction is only unstable, so that the roller is not caused to slip.

When the invented roller 1 and the comparative roller 3, and the invented roller 2 and the comparative roller 7 are compared, the rotational torque of the comparative roller 3 is 1.1 and the rotational torque of the comparative roller 7 is 1.1, so that each torque is higher, for the following reason. According to the comparative rollers 3 and 7, as compared with the invented rollers 1 and 2, each crowning R is small. Therefore, the movement of the roller is not stable, and a contact surface pressure is high as a whole and as a result, elastic hysteresis loss is increased.

When the invented roller 1 and the comparative roller 4, and the invented roller 2 and the comparative roller 8 are compared, the rotational torque of the comparative roller 4 is 1.7 and the rotational torque of the comparative roller 8 is 1.9, so that each torque is higher, for the following reason. According to the comparative rollers 4 and 8, as compared with the invented rollers 1 and 2, each crowning R is large. Therefore, the roller is likely to slip due to skewing and the roller is caused to slip, and rolling viscosity resistance is increased due to the roller slippage.

When the invented roller 1 and the comparative roller 9, and the invented roller 2 and the comparative roller 10 are compared, the rotational torque of the comparative roller 9 is 2.5 and the rotational torque of the comparative roller 10 is 3.2, so that each torque is higher, for the following reason. According to the comparative rollers 9 and 10, as compared with the invented rollers 1 and 2, an effective contact length is long. Therefore, the roller is likely to skew and the roller slippage is increased. In addition, rolling viscosity resistance is high regardless of the stability of the roller movement.

As described above, the torque of the invented roller 1 is lower than those of the comparative rollers 1, 3, 4 and 9, and the torque of the invented roller 2 is lower than those of the comparative rollers 5, 7, 8 and 10.

Thus, when the roller contained in the thrust roller bearing is constituted as described above, the life and silence properties are improved and the torque can be reduced.

In addition, although there are various kinds of retainers contained in the thrust roller bearing to retain the above roller, it is preferable to use a retainer in which an outer peripheral wall surface of a pocket is formed of a surface of an inner peripheral surface of an outer peripheral flange and the outer peripheral wall surface of the pocket is a surface formed by an ironing process.

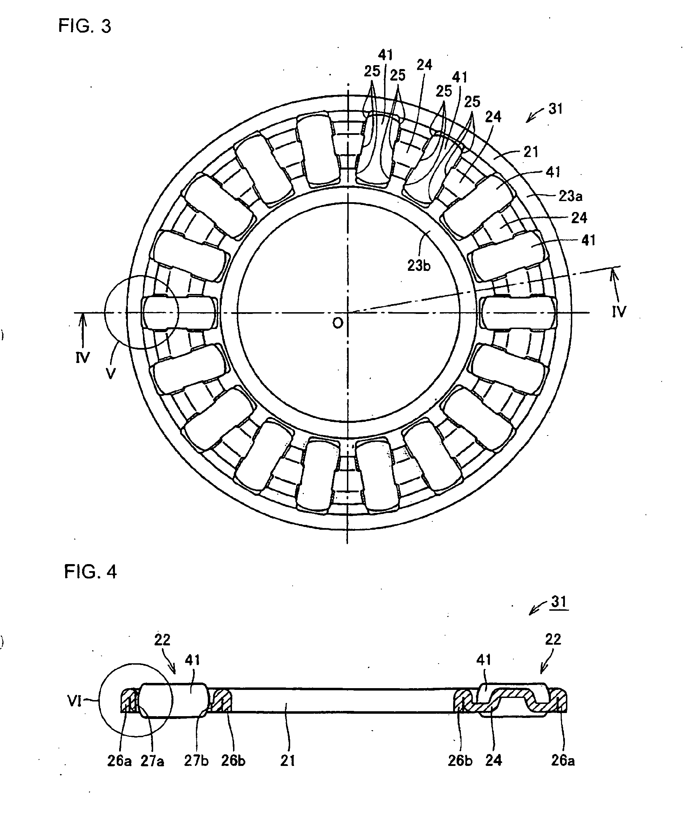

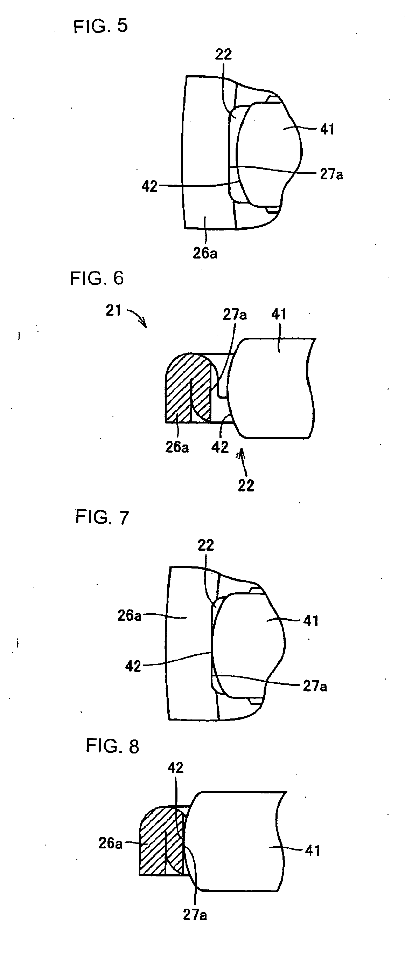

Fig. 3 is a view showing a thrust roller bearing containing the roller and the retainer described above and according to one embodiment of the present invention taken from a shaft direction. Fig. 4 is a sectional view showing the thrust roller bearing shown in Fig. 3 taken along line IV-O-IV in Fig. 3. Fig. 5 is an enlarged view showing a part V in Fig. 3. Fig. 6 is an enlarged view showing a part VI in Fig. 4.

Referring to Figs. 3 to 6, a thrust roller bearing 31 includes a plurality of rollers 41, and a retainer 21 for retaining the plurality of rollers 41. The roller 41 has the above-described constitution in which the full crowning having the first, second and third crownings is provided. In addition, an end face 42 of the roller 41 is formed of an A-end face, that is, an end face in which the radial center expands in a rolling axial direction, and its sectional surface has one curvature. In addition, the full crowning configuration of the roller is not shown in view of easy understanding in the following drawings.

The retainer 21 is formed of a disk-shaped member and provided with a pair of annular parts 23a and 23b, and a plurality of column parts for connecting the pair of annular parts 23a and 23b so as to form pockets 22 for holding the rollers 41. The pockets 22 are radially arranged around a notation shaft. A roller stopper 25 is provided in each pocket 22 to prevent the roller 41 from escaping. An allowance is provided in the pocket 22 to allow the roller 41 to move. The roller 41 can move in a direction of the rotation shaft, a radial direction and a circumferential direction in the pocket 22 within an allowable range, and the allowance range of the roller 41 is determined by the roller stopper 25 and the like.

The radial centers of the column parts 24 are folded back in the rotation shaft direction. In addition, the outer peripheral and inner peripheral flanges 26a and 26b of the retainer 21 are also folded back in the rotation shaft direction. The sectional views of the flanges 26a and 26b and the column part 24 are roughly W-shaped (refer to Fig. 4). The outer peripheral flange 26a folded back in the rotation shaft direction is positioned at the outer peripheral wall surface 27a of the pocket 22 as described above. In other words, the outer peripheral flange 26a folded back in the rotation shaft direction forms the outer peripheral wall surface 27a of the pocket 22.

Here, the outer peripheral wall surface 27a of the pocket 22 is an ironing-processed surface. For example, the ironing process is performed such that a male ironing jig having an ironing arm and a female ironing jig having an ironing groove are used, the retainer 21 is set on the female ironing jig, and the male ironing jig is moved in a vertical direction to shape the surface of the flange 26a folded back in the rotation shaft direction such that the thickness of flange 26a is reduced. The ironing-processed outer peripheral wall surface 27a of the pocket 22 is smooth and has preferable surface roughness as compared with the punched-out surface formed by a punching process and the surface of the retainer 21. In addition, the ironing process is not performed on the inner peripheral wall surface 27b of the pocket 22.

While the roller 41 rolls, the roller 41 is moved toward the outer periphery by centrifugal force and the like. In this case, the outer peripheral end face 42 of the roller 41 abuts on the outer peripheral wall surface 27a of the pocket 22.

Fig. 7 is a view showing a state in which the outer peripheral end face 42 of the roller 41 abuts on the outer peripheral wall surface 27a of the pocket 22, which corresponds to Fig. 5. In addition, Fig. 8 is an enlarged sectional view showing the thrust roller bearing 31 in this case, which corresponds to Fig. 6. Referring to Figs. 7 and 8, the outer peripheral end face 42 of the roller 41 abuts on the outer peripheral wall surface 27a of the pocket 22. More specifically, the most expanded part in the rolling axial direction in the end face 42 of the roller 41 abuts on the axial and radial center in the outer peripheral wall surface of the pocket 22.

Since the outer peripheral wall surface 27a of the pocket 22 is the ironing-processed surface, the surface roughness is preferable. Thus, even when the outer peripheral end face 42 of the roller 41 abuts on it, the drilling wear of the outer peripheral wall surface 27a of the pocket 22 can be prevented. In this case, since the outer peripheral end face 42 of the roller 41 is the A-end face and has a curved surface, it can be in contact at a point having a small circumferential speed. In addition, since the flange 26a folded back in the rotation shaft direction serves as the outer peripheral wall surface 27a, this area can be larger than the area of the thickness of the retainer 21. Thus, since the area can be large, a PV value provided by multiplying a contact surface pressure P by a slipping velocity V can be lowered. Especially, in the case of an F end face, that is, a flat end face, its effect is obvious.

Therefore, since the pocket 22 can hold the roller 41 stably for a long period of time, the thrust roller bearing 31 containing such retainer 21 can have a long life.

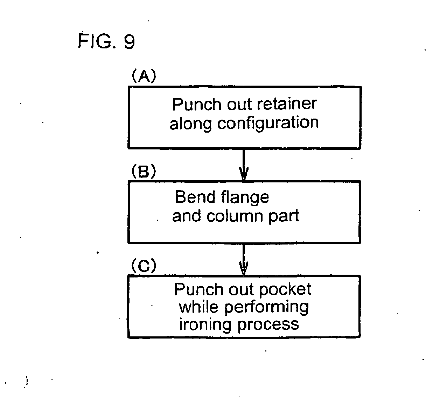

Here, a production method of the above retainer 21 will be described. Fig. 9A to Fig. 9C are flowcharts showing representative processes in the production method of the retainer 21.

With reference to Fig. 9A to Fig. 9B, the configuration of the retainer 21 is punched out of an iron plate that is a material for the retainer 21 (Fig. 9A). Then, the outer peripheral flange 26a and the inner radial flange 26b, and the center of the column part 24 of the retainer 21 are bent so as to be folded back in the rotation shaft direction by a pressing process and the like (Fig. 9B). Then, the pocket is punched out such that the ironing process is performed on the folded-back outer peripheral flange 26a to form the outer peripheral wall surface 27a of the pocket 22 (Fig. 9C). Thus, each pocket 22 in the retainer 21 is formed and the retainer 21 is produced.

According to the above production method, since the center of the column part 24 and the flanges 26a and 26b are bent so as to be folded back in the rotation shaft direction before the pocket is punched out, the pocket can be formed with high accuracy. Especially, even when the roller 41 has a small diameter, the outer peripheral surface of the retainer on which the roller end face is in contact can be ensured.

In addition, the end face of the roller may be an AR end face composed of a plurality of curved surfaces having different curvatures, or a R end face having a roughly R-shaped section. In addition, the roller includes a needle roller, a rod roller, a cylindrical roller, and another roller may be applied to it.

In addition, although the present invention is applied to the thrust roller bearing in the above embodiment, it is not limited to this and it can be applied to a radial roller bearing.

Although the embodiments of the present invention have been described with reference to the drawings in the above, the present invention is not limited to the above-illustrated embodiments. Various kinds of modifications and variations may be added to the illustrated embodiments within the same or equal scope of the present invention.

### INDUSTRIAL APPLICABILITY

According to the thrust roller bearing in the present invention, since its life and silence properties are improved and the torque can be reduced, it can be effectively applied to a compressor for a car air conditioner, an automatic transmission, a manual transmission and a hybrid car required to have a long life under a dilute lubrication condition.

## Claims

1. A roller provided with a full crowning on an outer diameter surface, wherein
said full crowning comprises a first crowning provided in the center of said roller in its rolling axial direction, a second crowning provided on each end face of said first crowning so as to be continued to said first crowning, and a third crowning provided on each end face of said second crowning so as to be continued to said second crowning, and
when a length of said roller in its rolling axial direction is twice a length of said roller in its radial direction and less, a curvature radius R1 of said first crowning positioned at a distance of 32% of the length of said roller in the rolling axial direction from each end face of said roller is R551 to R1000, a curvature radius R2 of said second crowning positioned at a distance of 23% of the length of said roller in the rolling axial direction from each end face of said roller is R321 to R550, and a curvature radius R3 of said third crowning positioned at a distance of 15% of the length of said roller in the rolling axial direction from each end face of said roller is R200 to R320, and
when a length of said roller in its rolling axial direction is more than twice but less than threefold the length of said roller in its radial direction, a curvature radius R4 of said first crowning positioned at a distance of 22% of the length of said roller in the rolling axial direction from each end face of said roller is R561 to R670, a curvature radius R5 of said second crowning positioned at a distance of 16% of the length of said roller in the rolling axial direction from each end face of said roller is R421 to R560, and a curvature radius R6 of said third crowning positioned at a distance of 12% of the length of said roller in the rolling axial direction from each end face of said roller is R310 to R420.

2. The roller according to claim 1, wherein
when it is assumed that a length of the roller in the rolling axial direction from one end face to a top of the outer diameter surface of said roller is "a", and a length of the roller in the rolling axial direction from the other end face to the top of the outer diameter surface of said roller is "b",
in the case where the length of said roller in the rolling axial direction is twice the length of said roller in the radial direction and less, a difference I a-b between the lengths is 4% of the length of said roller in the rolling axial direction and less, and
in a case where the length of said roller in the rolling axial direction is more than twice but less than threefold the length of said roller in the radial direction, a difference |a-b| between the lengths is 3% of the length of said roller in the rolling axial direction and less.

3. The roller according to claim 1, wherein
a roundness at a part provided with each of said first, second and third crownings is 1.5 µmand less.

4. The roller according to claim 1, wherein
a difference in crowning amount between the crowning provided on the one end face side and the crowning provided on the other end face side is 1 µm and less.

5. A thrust roller bearing comprising the roller according to claim 1, and a retainer, to support a thrust load.

6. The thrust roller bearing according to claim 5, wherein
said retainer is in the shape of a disk, and has a plurality of pockets for holding said rollers and an outer peripheral flange folded back in a rotation shaft direction,
an inner peripheral surface of said outer peripheral flange forms an outer peripheral wall surface of said pocket, and
said outer peripheral wall surface of the pocket is a ironing-processed surface.

## Patentansprüche

1. Walze mit einer vollen Balligkeit an einer äußeren Durchmesserfläche,
wobei
die volle Balligkeit eine erste Balligkeit umfasst, die in der Mitte der Walze in deren wälzenden Axialrichtung vorgesehen ist, eine zweite Balligkeit, die an jeder Stirnfläche der ersten Balligkeit vorgesehen ist, um zu der ersten Balligkeit fortgesetzt zu sein, und eine dritte Balligkeit, die an jeder Stirnfläche der zweiten Balligkeit derart vorgesehen ist, um zu der zweiten Balligkeit fortgesetzt zu sein, und
wenn eine Länge der Walze in deren wälzenden Axialrichtung zweimal eine Länge der Walze in deren Radialrichtung und weniger ist, ist ein Krümmungsradius R1 der ersten Balligkeit, der bei einer Distanz von 32% der Länge der Walze in der wälzenden Axialrichtung von jeder Stirnfläche der Walze angeordnet ist, R551 bis R1000 beträgt, ein Krümmungsradius R2 der zweiten Balligkeit, der bei einer Distanz von 23% der Länge der Walze in der Wälz-Axialrichtung von jeder Stirnfläche der Walze angeordnet ist, R321 bis R550 beträgt, und ein Krümmungsradius R3 der dritten Balligkeit, der bei einer Distanz von 15% der Länge der Walze in der rollenden Axialrichtung von jeder Stirnfläche der Walze angeordnet ist, R200 bis R320 beträgt, und
wenn eine Länge der Walze in deren rollenden Axialrichtung mehr als zweimal aber weniger als die 3-fache Länge der Walze in deren Radialrichtung ist, ist ein Krümmungsradius R4 der ersten Balligkeit, der bei einer Distanz von 22 % der Länge der Walze in der rollenden Axialrichtung von jeder Stirnfläche der Walze angeordnet ist, R561 bis R670 beträgt, ein Krümmungsradius R5 der zweiten Balligkeit, der bei einer Distanz von 16% der Länge der Walze in der rollenden Axialrichtung von jeder Stirnfläche der Walze angeordnet ist, R421 bis R560 beträgt, und ein Krümmungsradius R6 der dritten Balligkeit, der bei einer Distanz von 12% der Länge der Walze in der rollenden Axialrichtung von jeder Stirnfläche der Walze angeordnet ist, R310 bis R420 beträgt.

2. Walze nach Anspruch 1, **dadurch gekennzeichnet, dass**,
in der Annahme, dass eine Länge der Walze in der rollenden Axialrichtung von einer Stirnfläche zu einer Spitze der äußeren Durchmesserfläche der Rolle "a" ist und eine Länge der Walze in der rollenden Axialrichtung von der anderen Stirnfläche zu der Spitze der äußeren Durchmesserfläche der Walze "b" ist,
in dem Fall, wo die Länge der Walze in der rollenden Axialrichtung zweimal die Länge der Walze in der Radialrichtung und weniger ist, eine Different | a-b | zwischen den Längen 4% der Länge der Walze in der rollenden Axialrichtung und weniger ist, und
in einem Fall, wo die Länge der Walze in der rollenden Axialrichtung mehr als zweimal aber weniger als die drei-fache Länge der Walze in der Radialrichtung ist, eine Different | a-b | zwischen den Längen 3% der Länge der Walze in der rollenden Axialrichtung und weniger ist.

3. Walze nach Anspruch 1, **dadurch gekennzeichnet, dass**
eine Rundung an einem Teil, das mit jeder der ersten, zweiten und dritten Balligkeit versehen ist, 1,5 µm und weniger beträgt.

4. Walze nach Anspruch 1, **dadurch gekennzeichnet, dass**
eine Differenz im Balligkeitsbetrag zwischen der Balligkeit, die an der einen Stirnflächenseite vorgesehen ist und der Balligkeit, die an der anderen Stirnflächenseite vorgesehen ist, 1 µm und weniger beträgt.

5. Druckwalzenlager, umfassend die Walze nach Anspruch 1 und einen Halter, um eine Drucklast abzustützen.

6. Druckwalzenlager nach Anspruch 5, **dadurch gekennzeichnet, dass**
der Halter in der Form einer Scheibe ist und eine Vielzahl von Taschen zum Halten der Walzen aufweist und einen äußeren peripheren Flansch, der nach hinten in einer Rotationswellenrichtung gefaltet ist,
eine innere periphere Fläche von dem äußeren peripheren Flansch eine äußere periphere Wandfläche der Tasche bildet, und
die äußere periphere Wandfläche der Tasche eine Fläche ist, die durch Abstreckziehen behandelt ist.

## Revendications

1. Rouleau doté d'un bombement plein sur une surface diamétrale extérieure, dans lequel
ledit bombement plein comprend un premier bombement prévu au centre dudit rouleau dans sa direction axiale de roulement, un deuxième bombement prévu sur chaque face d'extrémité dudit premier bombement de façon à être continu par rapport audit premier bombement, et un troisième bombement prévu sur chaque face d'extrémité dudit deuxième bombement de façon à être continu par rapport au dit deuxième bombement, et
lorsque la longueur dudit rouleau dans sa direction axiale de roulement est double de la longueur dudit rouleau dans sa direction radiale et plus petite, un rayon de courbure R1 dudit premier bombement positionné à une distance de 32% de la longueur dudit rouleau dans la direction axiale de roulement à partir de chaque face d'extrémité dudit rouleau est R551 à R1000, un rayon de courbure R2 dudit deuxième bombement positionné à une distance de 23% de la longueur dudit rouleau dans la direction axiale de roulement à partir de chaque face d'extrémité dudit rouleau est R321 à R550, et un rayon de courbure R3 dudit troisième bombement positionné à une distance de 15% de la longueur dudit rouleau dans la direction axiale de roulement à partir de chaque face d'extrémité dudit rouleau est R200 à R320, et
lorsque la longueur dudit rouleau dans sa direction axiale est supérieure à deux fois mais inférieure à trois fois la longueur dudit rouleau dans sa direction radiale, un rayon de courbure R4 dudit premier bombement positionné à une distance de 22% de la longueur dudit rouleau dans la direction axiale de roulement à partir de chaque face d'extrémité dudit rouleau est R561 à R670, un rayon de courbure R5 dudit deuxième bombement positionné à une distance de 16% de la longueur dudit rouleau dans la direction axiale de roulement à partir de chaque face d'extrémité dudit rouleau est R421 à R560, et un rayon de courbure R6 dudit troisième bombement positionné à une distance de 12% de la longueur dudit rouleau dans la direction axiale de roulement à partir de chaque face d'extrémité dudit rouleau est R310 à R420.

2. Rouleau selon la revendication 1, dans lequel
lorsqu'il est supposé qu'une longueur du rouleau dans la direction axiale de roulement à partir d'une face d'extrémité jusqu'au sommet de la surface diamétrale extérieure dudit rouleau est "a", et qu'une longueur du rouleau dans la direction axiale de roulement à partir de l'autre face d'extrémité jusqu'au sommet de la surface diamétrale extérieure dudit rouleau est "b",
dans le cas où la longueur dudit rouleau dans la direction axiale de roulement est le double de la longueur dudit rouleau dans la direction radiale et plus petite, la différence [a-b] entre les longueurs représente 4% de la longueur dudit rouleau dans la direction axiale de roulement et moins, et
dans le cas où la longueur dudit rouleau dans la direction axiale de roulement est supérieure à deux fois mais inférieure à trois fois la longueur dudit rouleau dans la direction radiale, la différence [a-b] entre les longueurs représente 3% de la longueur dudit rouleau dans la direction axiale de roulement et moins.

3. Rouleau selon la revendication 1, dans lequel
une ovalisation au niveau d'une partie prévue avec chacun desdits premier, deuxième et troisième bombements est de 1,5 µm et moins.

4. Rouleau selon la revendication 1, dans lequel
la différence dans la valeur du bombement entre le bombement prévu sur le premier côté de la face d'extrémité et le bombement prévu sur l'autre côté de la face d'extrémité est de 1 µm et moins.

5. Butée à rouleaux comportant le rouleau selon la revendication 1, et un dispositif de retenue, afin de supporter une poussée axiale.

6. Butée à rouleaux selon la revendication 5, dans lequel
ledit dispositif de retenue se présente sous la forme d'un disque et comporte une pluralité de logements à fond plein en vue de permettre le maintien desdits rouleaux et un rebord périphérique extérieur replié en arrière dans une direction de l'axe de rotation,
une surface périphérique intérieure dudit rebord périphérique extérieur forme une surface de paroi périphérique extérieure dudit logement à fond plein, et
ladite surface de paroi périphérique extérieure du logement à fond plein est une surface traitée par étirage.
